# EUROPÄISCHE PATENTANMELDUNG

(11) **EP 0 800 936 A1**
(43) Veröffentlichungstag der Anmeldung: **15.10.1997**
(21) Anmeldenummer: 97104233.8
(22) Anmeldetag: 13.03.1997
(51) Int. Cl.: B60D 1/48, B60D 1/14, B62D 25/20

(54) **Vorrichtung zur Aufnahme einer Anhängekupplung**

(30) Priorität: 12.04.1996 DE 29606636 U
(71) Anmelder: BPW Bergische Achsen Kommanditgesellschaft, 51674 Wiehl (DE)
(72) Erfinder: Rossenbach, Bernhard, 51597 Morsbach (DE); Valpertz, Frank, 57462 Olpe (DE)
(74) Vertreter: Stenger, Watzke & Ring Patentanwälte

(57) **Zusammenfassung**

Die Erfindung betrifft eine Vorrichtung zur Aufnahme einer Anhängekupplung an den Längsträgern eines Fahrzeuguntergestells, vorzugsweise eines motorgetriebenen Zugfahrzeugs, mit einer quer zur Fahrzeuglängsrichtung unterhalb der Längsträger angeordneten Traverse für die Befestigung der Anhängekupplung. Um die bekannten Vorrichtungen zur Aufnahme einer Anhängekupplung an den Längsträgern eines Fahrzeuguntergestells weiterzubilden und insbesondere derart auszuführen, daß die Aufnahmevorrichtung auch für Zugfahrzeuge mit einer nicht am Schlußquerträger, sondern im Abstand nach vorn versetzt und unterhalb der Längsträger angeordneten Anhängekupplung für Starrdeichselanhänger geeignet ist, wird vorgeschlagen, daß die Traverse (5) über torsionsweiche Seitenteile (2,3,4) an den Längsträgern (1) des Fahrzeuguntergestells befestigt ist.

## Beschreibung

Die Erfindung betrifft eine Vorrichtung zur Aufnahme eine Anhängekupplung an den Längsträgern eines Fahrzeuguntergestells, vorzugsweise eines motorgetriebenen Zugfahrzeuges, mit einer quer zur Fahrzeuglängsrichtung unterhalb der Längsträger angeordneten Traverse für die Befestigung der Anhängekupplung.

Vorrichtungen zur Aufnahme einer Anhängerkupplung sind in verschiedenen Ausführungen bekannt. Sie werden üblicherweise als starre Schweißkonstruktion unter Verwendung von Versteifungsblechen mit einem hohen Arbeitsaufwand hergestellt.

Aufgrund der nicht nur unvermeidbaren, sondern neuerdings zur Verbesserung des Fahrverhaltens gewollten Torsionsfähigkeit des Fahrzeuguntergestells, an dessen Längsträgern die Anhängekupplung über eine Traverse befestigt wird, ergeben sich in der Aufnahmevorrichtung für die Anhängekupplung ausgeprägte Spannungsspitzen. Diese aus der Torsion der Längsträger des Fahrzeuguntergestells herrührenden Spannungsspitzen führen häufig zu Schäden, denen man bisher durch zusätzliche Versteifungen der starren Schweißkonstruktion zu begegnen suchte. Diese zur Versteifung der Aufnahmevorrichtung dienenden Maßnahmen sind jedoch stets mit dem Anbringen zusätzlicher Schweißnähte verbunden, die ihrerseits eine Materialschädigung erzeugen.

Der Erfindung liegt die **Aufgabe** zugrunde, die bekannten Vorrichtungen zur Aufnahme einer Anhängekupplung an den Längsträgern eines Fahrzeuguntergestells zwecks Vermeidung der voranstehend geschilderten Nachteile weiterzubilden und insbesondere derart auszuführen, daß die Aufnahmevorrichtung auch für Zugfahrzeuge mit einer nicht am Schlußquerträger, sondern im Abstand nach vorn versetzt und unterhalb der Längsträger angeordneten Anhängekupplung für Starrdeichselanhänger geeignet ist.

Die **Lösung** dieser Aufgabenstellung durch die Erfindung ist dadurch gekennzeichnet, daß die Traverse über torsionsweiche Seitenteile an den Längsträgern des Fahrzeuguntergestells befestigt ist.

Durch die erfindungsgemäße Verwendung torsionsweicher Seitenteile zur Befestigung der Traverse an den Längsträgern des Fahrzeuguntergestells wird die Torsionsweichheit des Fahrzeuguntergestells nicht oder nur in vernachlässigbar geringem Umfang behindert. Auf diese Weise wird nicht nur eine negative Beeinträchtigung der mit der Torsionsweichheit des Fahrzeuguntergestells angestrebten Verbesserung des Fahrverhaltens vermieden, sondern auch das Entstehen ausgeprägter Spannungsspitzen im Bereich der Aufnahmevorrichtung, da sich deren Seitenteile aufgrund ihrer torsionsweichen Ausführung bewußt verbiegen und tordieren können, wenn sich aufgrund der Torsionsweichheit des Fahrzeuguntergestells die Lage der Längsträger relativ zueinander verändert. Die erfindungsgemäße Aufnahmevorrichtung besteht somit nicht nur aus weniger Einzelteilen, womit eine Gewichtsersparnis erzielt wird, sondern ist auch fertigungstechnisch einfacher herzustellen. Ein weiterer Vorteil besteht darin, daß die erheblich einfachere Konstruktion der erfindungsgemäßen Aufnahmevorrichtung spannungstechnisch analytisch erfaßt werden kann, so daß sie exakt auf die in der Praxis auftretenden Kräfte und Momente abgestellt werden kann.

Gemäß einem weiteren Merkmal der Erfindung können die Seitenteile zur Anpassung an unterschiedliche Abstände einerseits zwischen den Längsträgern des Fahrzeuguntergestells und andererseits zwischen den Enden der Traverse gekröpft ausgeführt werden, ohne daß hierdurch ihre Torsionsweichheit verloren geht.

Bei einer bevorzugten Ausführungsform der Erfindung ist jedes Seitenteil im Querschnitt als offenes Profil ausgebildet, insbesondere als U-Profil. Alternativ ist es auch möglich, jedes Seitenteil als geschlossenes Profil mit die Torsionsweichheit hervorrufenden Aussparungen auszubilden, vorzugsweise als Kastenprofil mit im wesentlichen rechteckigen Querschnitt und mit mindestens einer Aussparung in mindestens einer Profilwand.

Auf der Zeichnung sind drei Ausführungsbeispiele der erfindungsgemäßen Aufnahmevorrichtung dargestellt, und zwar zeigen:
- Fig. 1: eine Ansicht einer ersten Ausführungsform mit im Querschnitt U-förmigen Seitenteilen,
- Fig. 2: eine Seitenansicht zu Fig. 1,
- Fig. 3: eine hälftige Draufsicht auf die Aufnahmevorrichtung nach den Fig. 1 und 2,
- Fig. 4: eine Ansicht einer zweiten Ausführungsform,
- Fig. 5: eine Seitenansicht zu Fig. 4,
- Fig. 6: eine hälftige Draufsicht auf die Aufnahmevorrichtung nach den Fig. 4 und 5,
- Fig. 7: eine Ansicht einer dritten Ausführungsform,
- Fig. 8: eine Seitenansicht zu Fig. 7 und
- Fig. 9: eine hälftige Draufsicht auf die Aufnahmevorrichtung nach den Fig. 7 und 8.

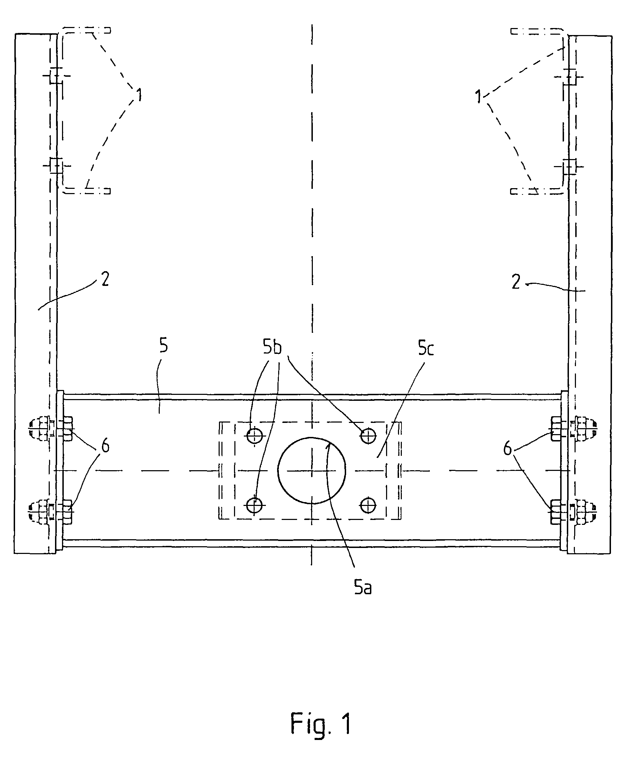

Bei allen drei Ausführungsbeispielen sind mit gestrichelten Linien Teile von Längsträgern 1 eines im übrigen nicht dargestellten Fahrzeuguntergestells angedeutet, an dem eine Anhängekupplung angeordnet werden soll. Wie insbesondere die rückwärtigen Ansichten in den Fig. 1,4 und 7 erkennen lassen, haben bei den dargestellten Ausführungsbeispielen die Längsträger 1 einen U-förmigen Querschnitt, wobei die Schenkel der Längsträger 1 gegeneinander, d.h. zur Fahrzeuglängsmitte weisen.

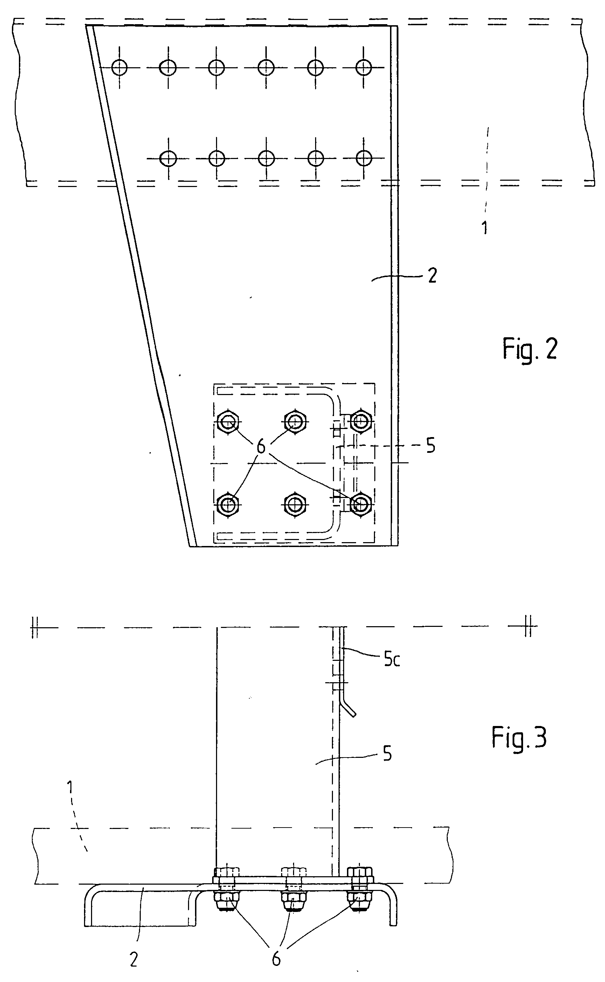

An den parallel zueinander verlaufenden Stegen der U-förmigen Längsträger 1 wird mittels zweier Seitenteile 2,3 bzw. 4 eine Traverse 5 befestigt, die ihrerseits zur Befestigung der auf den Zeichnungen nicht dargestellten Anhängekupplung dient. Zu diesem Zweck ist die Traverse mit einer mittigen Bohrung 5a, vier Schraubenlöchern 5b und einer Verstärkungsplatte 5c versehen, die insbesondere in den Draufsichten gemäß den Fig. 3,6 und 9 zu erkennen ist. Bei allen drei Ausführungsbeispielen hat auch die Traverse 5 einen U-förmigen Querschnitt und wird mittels Schrauben 6 am unteren Ende der Seitenteile 2,3 bzw. 4 befestigt.

Um die Torsionsfähigkeit des Fahrzeuguntergestells, d.h. eine Lageänderung der Längsträger 1 relativ zueinander nicht zu behindern und das Entstehen von Spannungsspitzen in der Traverse 5 zu vermeiden, sind die Seitenteilen 2,3 und 4 torsionsweich ausgeführt. Sie können sich bei einer Lageänderung der Längsträger 1 relativ zueinander verbiegen und verwinden, ohne die Haltbarkeit der Aufnahmevorrichtung zu beeinträchtigen. Hinsichtlich der Ausgestaltung der Seitenteile 2 bzw. 3 bzw. 4 unterscheiden sich die drei dargestellten Ausführungsbeispiele.

Beim ersten Ausführungsbeispiel gemäß den Fig. 1 bis 3 ist jedes Seitenteil 2 als offenes Profil mit U-förmigem Querschnitt ausgeführt, dessen Steg einerseits am zugehörigen Längsträger 1 und andererseits an der Traverse 5 angeschraubt ist. Die nach außen weisenden Schenkel der U-förmigen Seitenteile 2 schaffen die notwendige Stabilität, ohne deren Verwindungsfähigkeit zu beeinträchtigen. Wie die Fig. 2 und 3 zeigen, hat der Steg der U-förmigen Seitenteile 2 einseitig einen schrägen Verlauf.

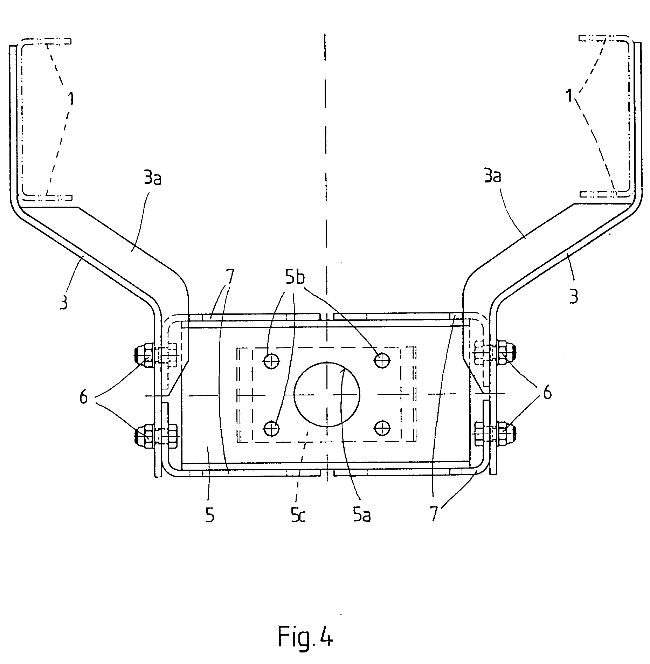

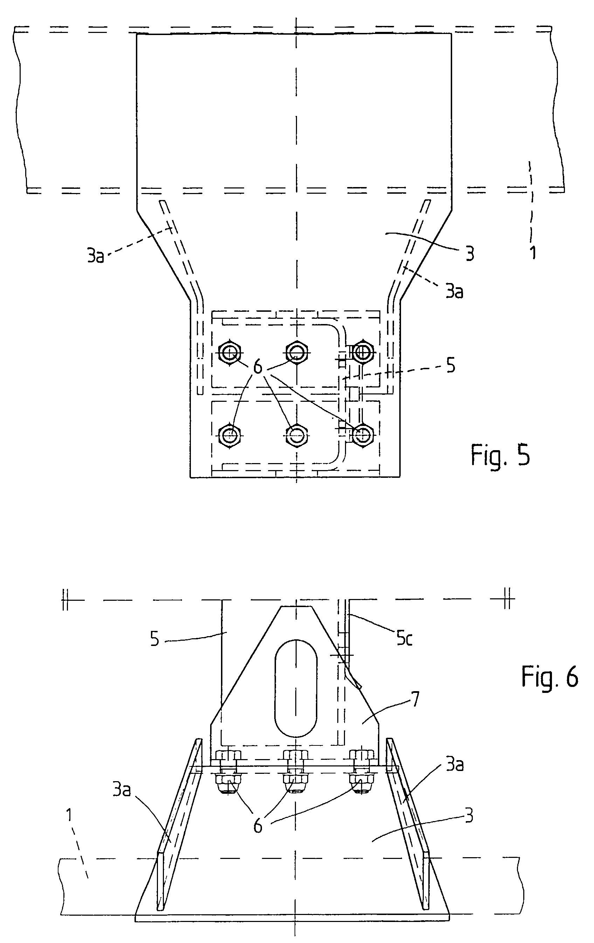

Beim zweiten Ausführungsbeispiel nach den Fig. 4 und 6 sind die Seitenteile 3 gekröpft, wie insbesondere aus Fig. 4 hervorgeht. Sie bestehen aus einem bandförmigen Grundkörper mit unterschiedlicher Breite im Bereich ihrer Befestigung einerseits am Längsträger 1 und andererseits an der Traverse 5; zwischen diesen Bereichen haben die Seitenteile 3 schräg verlaufende Längsränder. Zur Versteifung ist jedes Seitenteil 3 auf der Innenseite mit einem aufgeschweißten Verstärkungsblech 3a versehen, das im Zusammenwirken mit der Kröpfung für die notwendige Stabilität der Seitenteile 3 sorgt. Die Befestigung der Traverse 5 zwischen den unteren Teilen der Seitenteile 3 erfolgt bei diesem Ausführungsbeispiel durch Befestigungswinkel 7, die am besten in den Fig. 4 und 6 zu erkennen sind.

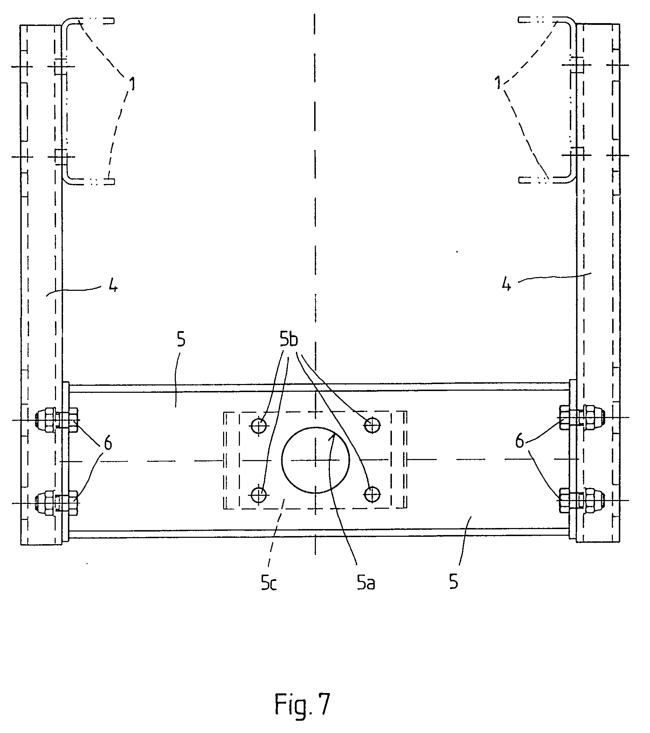

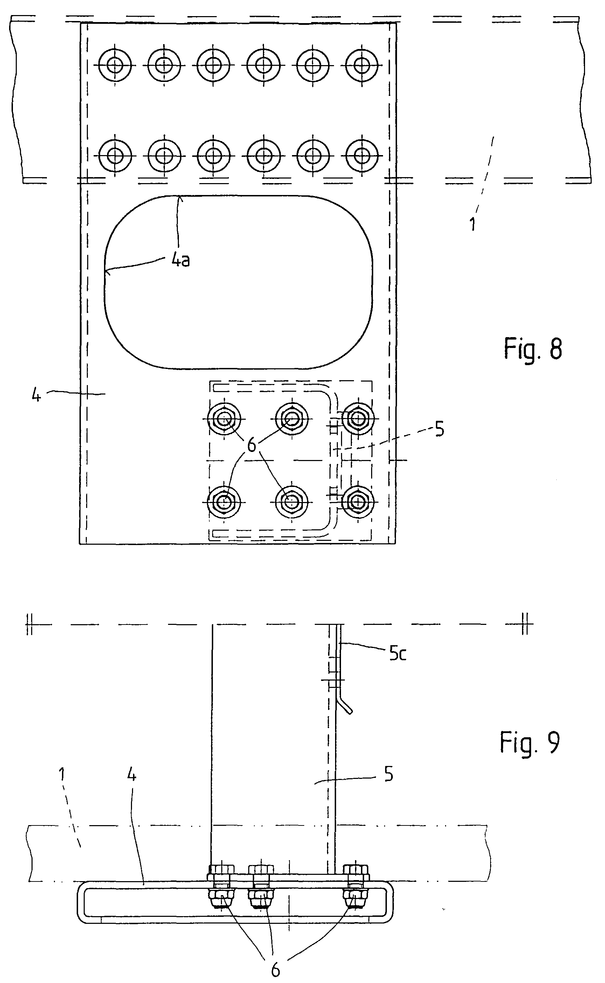

Das dritte Ausführungsbeispiel gemäß den Fig. 7 bis 9 zeigt torsionsweiche Seitenteile 4, die jeweils als geschlossenes Profil ausgebildet sind. Beim Ausführungsbeispiel handelt es sich - wie am besten aus Fig. 9 hervorgeht - um ein Kastenprofil mit rechteckigem Querschnitt, das in mindestens einer Profilwand mit einer die Torsionsweichheit hervorrufenden bzw. verbessernden Aussparung 4a versehen ist. Selbstverständlich sind auch andere Ausgestaltungen des für torsionsweiche Seitenteile verwendeten geschlossenen Profiles möglich; außerdem können die geschlossenen Kastenprofile mit einer unterschiedlichen Anzahl von Aussparungen und mit unterschiedlich gestalteten Aussparungen in einer oder mehreren Profilwänden versehen sein, um die gewünschte Torsionsfähigkeit der Seitenteile zu erzeugen.

### Bezugszeichenliste:

- 1: Längsträger
- 2: Seitenteil
- 3: Seitenteil
- 3a: Verstärkungsblech
- 4: Seitenteil
- 4a: Aussparung
- 5: Traverse
- 5a: Öffnung
- 5b: Schraubenloch
- 5c: Verstärkungsplatte
- 6: Schraube
- 7: Befestigungswinkel

## Patentansprüche

1. Vorrichtung zur Aufnahme einer Anhängekupplung an den Längsträgern eines Fahrzeuguntergestells, vorzugsweise eines motorgetriebenen Zugfahrzeugs, mit einer quer zur Fahrzeuglängsrichtung unterhalb der Längsträger angeordneten Traverse für die Befestigung der Anhängekupplung,
**dadurch gekennzeichnet,**
daß die Traverse (5) über torsionsweiche Seitenteile (2,3,4) an den Längsträgern (1) des Fahrzeuguntergestells befestigt ist.

2. Vorrichtung nach Anspruch 1, dadurch gekennzeichnet, daß die Seitenteile (3) zur Anpassung an unterschiedliche Abstände einerseits zwischen den Längsträgern (1) des Fahrzeuguntergestells und andererseits zwischen den Enden der Traverse (5) gekröpft sind.

3. Vorrichtung nach Anspruch 1 oder 2, dadurch gekennzeichnet, daß jedes Seitenteil (2) im Querschnitt als offenes Profil ausgebildet ist.

4. Vorrichtung nach Anspruch 3, dadurch gekennzeichnet, daß jedes Seitenteil (2) im Querschnitt als U-Profil ausgebildet ist.

5. Vorrichtung nach Anspruch 1 oder 2, dadurch gekennzeichnet, daß jedes Seitenteil (4) als geschlossenes Profil mit die Torsionsweichheit hervorrufenden Aussparungen (4a) ausgebildet ist.

6. Vorrichtung nach Anspruch 5, dadurch gekennzeichnet, daß jedes Seitenteil (4) als Kastenprofil mit im wesentlichen rechteckigen Querschnitt und mit mindestens einer Aussparung (4a) in mindestens einer Profilwand ausgebildet ist.
